# EUROPEAN PATENT SPECIFICATION

(11) **EP 1 471 300 B1**
(45) Date of publication and mention of the grant of the patent: **01.07.2009**
(21) Application number: 04075928.4
(22) Date of filing: 24.03.2004
(51) Int. Cl.: F16M 11/10, F16M 11/12, F16M 11/04

(54) **Device suitable for supporting a component**
Vorrichtung zum Tragen von einem Element
Dispositif pour le support d'un élément

(30) Priority: 31.03.2003 NL 1023051
(43) Date of publication of application: 27.10.2004
(73) Proprietor: Vogel's Holding B.V., 5628 DB Eindhoven (NL)
(72) Inventor: van Kuijk, Ewald, 5622 GN Eindhoven (NL); van Groesen, Wilhelmus Maria, 5017 GA Tilburg (NL)
(74) Representative: Algemeen Octrooi- en Merkenbureau

(56) References cited:
- EP-A- 0 202 446
- EP-A- 1 139 003
- DE-U1- 29 905 420
- US-A- 4 516 751
- US-A- 5 833 183
- US-A- 6 047 939
- US-B1- 6 367 756

## Description

The invention relates to a device suitable for supporting a component, which device comprises a support provided with at least one recess in which a connecting element connectable to the component can be detachably mounted,
- the connecting element has a first part, which comprises a plate member to be detachably connectable to the component as well as an arcuate guide connected to said plate member,
- the connecting element furthermore has a second part to be detachably connected to the support, which second part comprises two sections and an arcuate recess between the two sections in which the arcuate guide is present,
- the arcuate guide abuts against one of the sections at one side and against the other section at the other side under the influence of the weight of the connecting element and the component that is connectable thereto,
- frictional forces which occur between the arcuate guide and the sections, provide sufficient resistance to prevent the connecting element and the component that is connectable thereto from tilting
   By such a device, which is known from DE-U1-299.05.420, the plate member extends horizontally in a rest position whereby a vision screen of a monitor, being supported by the plate member extends almost perpendicular thereto. The plate member is pivotable about a vertically extending axis extending perpendicular to the plate member. Furthermore the plate member is tiltable about a horizontally extending asis extending parallel to the plate member. Due to these movements, the vision screen of the monitor, extending perpendicular to the plate member can be positioned in a desired manner.
   This known device is not suitable for supporting a flat screen, which need to be tilted and pivoted in a simple manner.
   The object of the invention is to provide a device which is relatively compact, in which tilting and pivoting of a flat screen can be effected in a simple manner.
   This object is accomplished with the device according to the invention in that the component is a flat screen to whose rear side the plate member is connectable,
- the device is connectable to a wall, whereby when the flat screen is not being used it is positionable in a position in which the flat screen and the plate member extend substantially parallel to the wall,
- the connecting element can be jointly pivoted with the support about a vertically extending axis, whilst the first part of the connecting element can be tilted about a horizontally extending axis with respect to the support,
- which horizontally and vertically extending axes extend parallel to the plate member in said position
- whereby against the frictional forces the first part can be manually tilted about the horizontally extending axis with respect to said second part by means of said arcuate guide.

In this way the component can be tilted about a horizontally extending axis and also be pivoted about a vertically extending axis, thus realising a wide range of adjusting possibilities of the component.

After being attached to the support, the second part of the connecting element is rigidly connected to said support. The first part, which is connected to the component, can be tilted with respect to said second part by means of the arcuate guide. Since the connecting element is detachably attached to the support, the connecting element can first be fixed to the component, such as a relatively costly flat screen, whilst the mounting bracket is separately mounted on a supporting surface, such as a wall. Then the connecting element is attached to the support, providing a solid connection between the component and the support. In addition, no tools or adjusting means are required for this final step.

It is noted that there are devices for supporting the component in which a support is first attached to a bracket, after which the component must be screwed to the support that has already been mounted on the wall. If the component is a flat screen, such as a relatively costly and vulnerable plasma screen or LCD screen, this is a fairly risky procedure. When the support is first fixed to the flat display screen, problems present themselves upon subsequent attachment of the support to the wall. With the device according to the invention, the readily detachable connection between the connecting element and the support makes it possible to fix the connecting element to the component in a simple manner, mount the support on the wall and subsequently effect the desired support of the component by having the connecting element and the support engage each other.

One embodiment of the device according to the invention is characterized in that the connecting element can be slidably fitted in the recess of the support.

As a result of said slidable fitting of the connecting element in the recess of the support, the connection between the connecting element and the support is realised in a simple manner.

Another embodiment of the device according to the invention is characterized in that the arcuate guide can be locked in position in the arcuate recess.

Since the arcuate guide can be locked in position in the arcuate recess, tilting of the second part, which is to be provided in the support, with respect to the component upon attachment of the connecting element to the support is prevented in a simple manner, thus making it easier to attach the connecting element to the support.

Yet another embodiment of the connecting element according to the invention is characterized in that the connecting element is provided with a lip that engages the arcuate guide under spring force, which lip is moved out of engagement with the arcuate guide upon attachment of the connecting element to the support.

The spring-loaded engagement between lip and the arcuate guide ensures in a simple manner that the first part is locked in position with respect to the second part, whilst said locking engagement is released, as a result of the lip being unlocked, upon attachment of the connecting element to the support, as a result of which the component can be tilted with respect to the support.

Yet another embodiment of the device according to the invention is characterized in that at least one arm is positioned between the mounting bracket and the support, which arm is pivotally connected to the mounting bracket with one end and which is pivotally connected to the support with the other end.

Said arm also makes it possible to move the component towards a wall or away from a wall. When the component is not being used, it may be placed in a position in which it extends substantially parallel to the wall, whilst the component may be positioned a desired distance from the wall, at a desired angle thereto, when being used.

Yet another embodiment of the device according to the invention is characterized in that an 0-ring is present between the mounting bracket, the arm(s) and/or the support, which can pivot relative to each other, which 0-ring has an external diameter larger than that of the mounting bracket, the arm(s) and/or the support present on either side of said 0-ring.

As a result of the presence of the 0-ring, differences in the dimensions of the mounting bracket, the arm(s) and/or the support are hidden substantially entirely from view. An additional advantage of the 0-ring is the fact that it will act as a stop upon movement of the arm to a position in which it extends parallel to the wall, so that damage to the wall is prevented in a simple manner.

The invention will now be explained in more detail with reference to the drawings, in which:
Fig. 1 shows a device according to the invention, which comprises a support which is supported by two arms;
Fig. 2 shows a second embodiment of a device according to the invention, which comprises a support which is supported by a single arm;
Fig. 3 shows a third embodiment of a device according to the invention, in which the support is pivotally connected to a mounting bracket to be mounted on a wall;
Figs. 4A and 4B show details of the device of Fig. 1, in which the connecting element is shown in a position in which it is disconnected from the support and in a position in which it is connected thereto, respectively;
Figs. 5A and 5B are perspective views of a part of the device that is shown in Fig. 1, in which the connecting element is shown in partially disassembled condition and in assembled condition, respectively; and
Fig. 6 is a top plan view of the embodiment that is shown in Fig. 1, showing the arms in a collapsed position thereof.

Like parts are indicated by the same numerals in the figures.

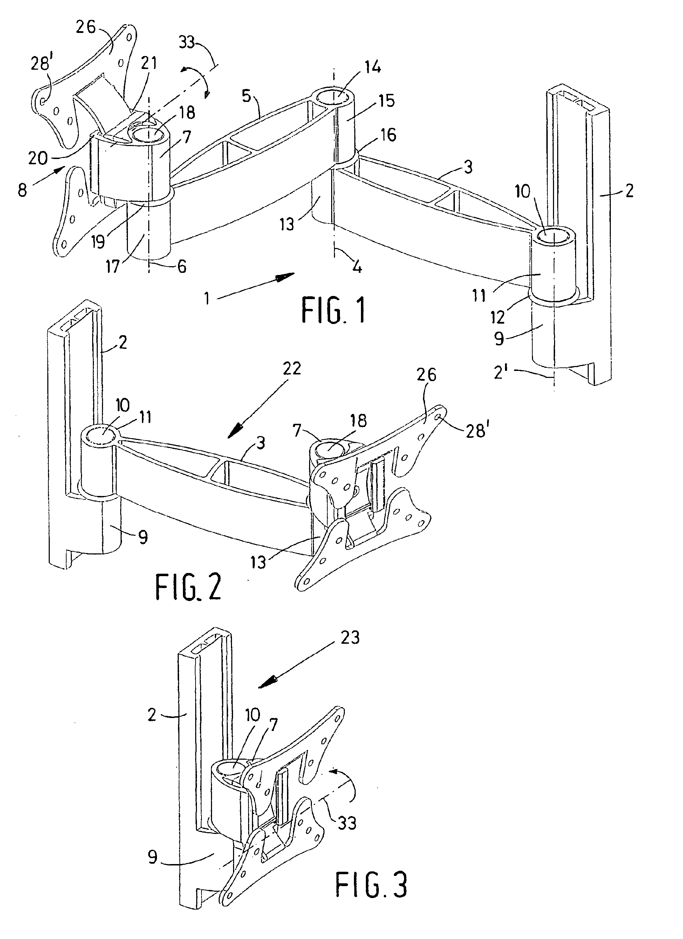

Fig. 1 shows a device 1 according to the invention, which comprises a mounting bracket 2, which can be mounted on a wall, an arm 3, which is pivotally connected to the mounting bracket 2 about a pivot axis 2', an arm 5, which pivotally connected to the pivoting arm 3 about a pivot axis 4, and a support 7, which is pivotally connected to the arm 5 about a pivot axis 6. A connecting element 8 is detachably connected to the support 7.

The mounting bracket 2 comprises a bushing 9, which is rigidly connected thereto, and a pin 10, which extends in upward direction from said bushing. A bushing 11 attached to one end of the arm 3 is supported on the pin 10, being pivotable about the pivot axis 2'. Positioned between the bushing 11 that is connected to the arm and the bushing 9 that is connected to the mounting bracket 2 is an 0-ring 12, whose external diameter is larger than the external diameter of the bushing 9, 11. The 0-ring 12 is preferably made of a relatively soft plastic material. The arm 3 is provided with a bushing 13 at an end remote from the bushing 11, and with a pin 14 extending in upward direction therefrom. A bushing 15 is supported on the pin 14, being pivotable about the axis 4, which bushing 15 is fixed to one end of the arm 5. Positioned between the bushings 13, 15 is an 0-ring 16, whose external diameter is larger than the external diameter of the bushings 13, 15. The arm 5 is provided with a bushing 17 at an end remote from the bushing 15, and with a pin 18 extending in upward direction therefrom. The support 7 is supported on the pin 18, being pivotable about the axis 6 thereof. Positioned between the support 7 and the bushing 17 is an 0-ring 19, whose external diameter is larger than the external diameter of the bushing 17. In addition, the 0-ring 19 extends beyond the support 7 over a relatively large part thereof. As is clearly shown in Fig. 1, the arm 3 is identical to the arm 5, and the number of interconnected arms can be increased in a simple manner.

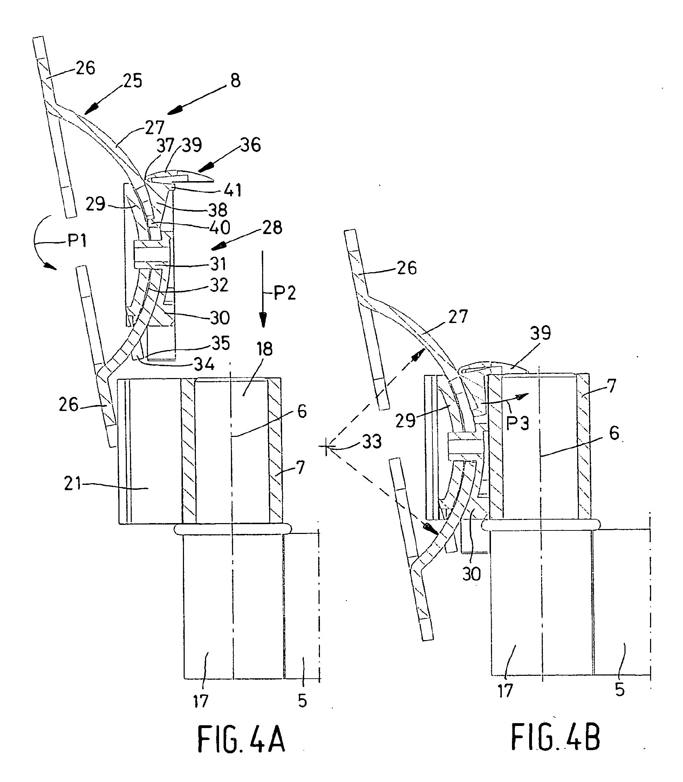

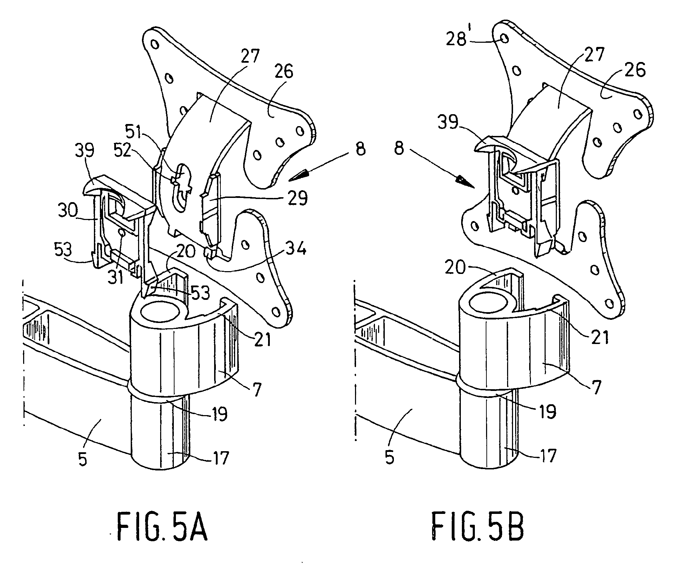

The support 7 is provided with a U-shaped recess, which is bounded by two L-shaped legs 20, 21 positioned on either side of the recess. The connecting element 8 is detachably secured in the recess bounded by the L-shaped legs 20, 21. The connecting element 8 will be explained in more detail with reference to Figs. 4A, 4B, 5A and 5B.

Fig. 2 shows a second embodiment of a device 22 according to the invention, which largely corresponds to the embodiment that is shown in Fig. 1, except that the device 22 only comprises a single arm 3, with the support 7 being pivot-mounted in the bushing 13 by means of the pin 14.

Fig. 3 shows a third embodiment of a device 23 according to the invention, in which the support 7 is pivot-mounted in the bushing 9 of the mounting bracket 2 by means of the pin 18.

Now the connecting element 8 and the connection of the connecting element 8 to the support 7 will be explained in more detail with reference to Figs. 4A, 4B, 5A and 5B.

Figs. 4A and 4B are side elevations of a part of the device that is shown in Fig. 1, in which the connecting element is shown in a position in which it is disconnected from the support 7 and in a position in which it is connected thereto, respectively.

Figs. 5A and 5B are perspective views of a part of the device of Fig. 1, in which the connecting element is shown in partially disassembled condition and in assembled condition, respectively.

The connecting element 8 comprises a first part 25, which is provided with a plate member 26 to be fixed to a component and with an arcuate guide 27 to be connected to the plate member 26. The first part 25 is made in one piece, for example by means of metal deforming techniques. The plate member 26 is provided with a number of mounting holes 28 (see Fig. 1) for fixing a component to the plate member 26, for example by means of bolts extending through the holes 28.

The connecting element 8 furthermore comprises a second part 28. The second part 28 comprises two sections 29, 30 of plastic material positioned opposite each other, which are connected by means of a central pin 31. Positioned between the parts 29, 30 is an arcuate recess 32, with the curvature of the recess 32 and the spacing between the sections 29, 30 corresponding to the curvature and the thickness, respectively, of the arcuate guide 27. As is shown in Figs. 4A and 4B, the arcuate guide 27 is positioned in the arcuate recess 32 bounded by the sections 29, 30. The accurate guide 27 is provided with a slot 51 (Fig. 5A) extending along the curvature of the arcuate guide 27 through which slot 51 the central pin 31 extends. This makes it possible to move the arcuate guide 27 through the arcuate the recess 32, during which movement the first part 25 is tilted about a horizontally extending virtual axis 33 (see Fig. 1). The tilting movement of the first part 25 in the direction indicated by the arrow P1 is limited by the length of the slot 51. The second part 28 furthermore comprises a lip 36 of plastic material. Said lip 36 comprises two parts 38 and 39 which are hinged together by means of a relatively thin plastic hinge member 37. The part 38 is provided with a projection 40 on a side remote from the hinged transition 37 which, in the position of the connecting element 8 that is shown in Fig. 4A, is in engagement with a recess 52 (Fig. 5A) present in the arcuate guide 27 of the first part 25.

The operation of the devices shown in Figs. 1, 2 and 3 will now be explained in more detail.

A user who wishes to mount a component, such as a flat screen, on a wall, for example, will proceed as follows.

First, the user will fix the mounting bracket 2 to the wall, using suitable means of attachment. Subsequently, a bushing 11 is fitted over the pin 10 or the support 7 is directly positioned over the pin 10, depending on the number of arms 3, 5 that are needed. After the desired number of arms 3, 5 have been fitted, the support 7 is fixed to the end of the last arm. This may have been done at the works already. Then the plate member 26 is fixed to the component, using means of attachment such as bolts, at a desired location where sufficient support for the component is available, so that damage to the component is prevented. The flat screen is preferably laid on a flat supporting surface, such as a table, after which the plate member 26 is connected to the rear side of the flat screen.

Subsequently, the user lifts up the component with the connecting element that is fixed thereto and moves the assembly to the position that is shown in Fig. 4A, in which the second part 28 of the connecting element 8 is positioned above the recess in the support 7 that is bounded by the L-shaped legs 20, 21. Following that, the connecting element 8 is moved in the direction indicated by the arrow P2, during which movement the second part 28 as well as the arcuate guide 27 present therein are moved into the recess bounded by the L-shaped legs 20, 21. The projections 34 on the arcuate guide act as guides upon insertion of the connecting element 8 into the support 7. The part 39 of the lip 36 of plastic material is thus moved into abutment with an upper side of the support 7, thus preventing the connecting element 8 from moving any further in the direction indicated by the arrow P2. At the same time a projection 41, which is present on a side of the part 38 remote from the projection 40, comes into contact with an upper edge of the support 7, as a result of which the part 38 is tilted about the hinge member 37 in the direction indicated by the arrow P1, as a result of which the engagement between the cam 40 and the arcuate guide is released. Thus, the accurate guide 27 can subsequently be freely tilted in the direction indicated by the arrow P1 and in the opposite direction.

As is shown in Fig. 5A, the second part 30 is provided with two barb-shaped elements 53 on a side remote from the part 39 of a lip 36 of plastic material, which elements engage a lower edge of the support 7. As a result, a solid connection between the connecting element 8 and the support is effected, in which the barb-shaped elements 53 prevent accidental movement of the connecting element 8 out of the support 7 in a simple manner.

The dimensioning of the arcuate guide and the arcuate recess 32 is such that the arcuate guide 27 abuts against the section 29 at the upper side and against the section 30 at the bottom side under the influence of the weight of the connecting element 8 and the component that is connected thereto. The frictional forces that occur provide sufficient resistance to prevent the connecting element 8 and the component that is connected thereto from tilting any further in the direction indicated by the arrow P1. Only when a user takes hold of the component and tilts it in the direction indicated by the arrow P1 or in the opposite direction will a tilting movement actually take place.

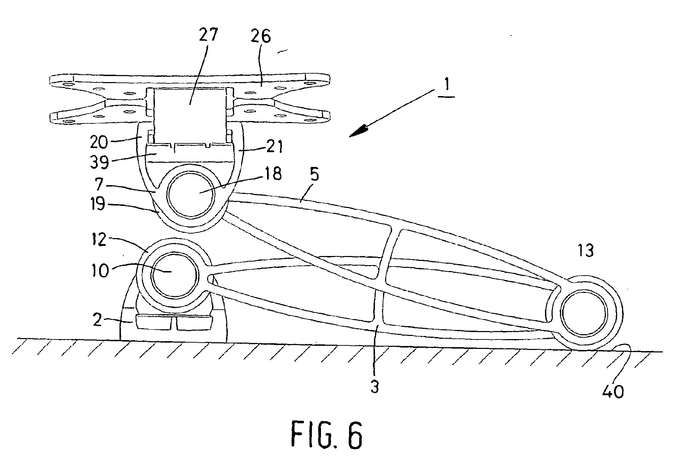

Fig. 6 is a top plan view of the device 1 that is shown in Fig. 1, in which the arms 3, 5 are shown to have been moved to a position in which they are disposed one above the other. The component that is connected to the connecting element is positioned relatively close to a wall 40. If desired, the arm 5 can be moved to a position even closer to the wall 40, in which position the pins 10 and 18 are in line, as it were. As is clearly shown in Fig. 6, the relatively soft 0-ring 13 abuts against the wall 40, as a result of which damage to the wall 40 and/or the arms 3, 5 is prevented in a simple manner and only a relatively quiet sound is heard upon impact against the wall.

## Claims

1. A device (1) suitable for supporting a component, which device comprises a support (7) provided with at least one recess in which a connecting element (8) connectable to the component can be detachably mounted,
- the connecting element (8) has a first part (25), which comprises a plate member (26) to be detachably connectable to the component as well as an arcuate guide (27) connected to said plate member (26),
- the connecting element (8) furthermore has a second part (28) to be detachably connected to the support (7), which second part (28) comprises two sections (29, 30) and an arcuate recess (32) between the two sections (29, 30) in which the arcuate guide (27) is present,
- the arcuate guide (27) abuts against one of the sections (29) at one side and against the other section (30) at the other side under the influence of the weight of the connecting element (8) and the component that is connectable thereto,
- frictional forces which occur between the arcuate guide (27) and the sections (29, 30), provide sufficient resistance to prevent the connecting element (8) and the component that is connectable thereto from tilting, **characterized in that**
- the component is a flat screen to whose rear side the plate member (26) is connectable,
- the device (1) is connectable to a wall (40), whereby when the flat screen is not being used it is positionable in a position in which the flat screen and the plate member (26) extend substantially parallel to the wall (40),
- the connecting element (8) can be jointly pivoted with the support (7) about a vertically extending axis (6), whilst the first part of the connecting element (8) can be tilted about a horizontally extending axis (33) with respect to the support (7),
- which horizontally and vertically extending axes (6,33) extend parallel to the plate member in said position
- whereby against the frictional forces the first part (25) can be manually tilted about the horizontally extending axis (33) with respect to said second part (28) by means of said arcuate guide (27).

2. A device (1) according to claim 1, **characterized in that** the connecting element (8) can be slidably fitted in the recess of the support (7).

3. A device (1) according to any one of the preceding claims, **characterized in that** the arcuate guide (27) can be locked in position in the arcuate recess (32).

4. A device (1) according to claim 3, **characterized in that** the connecting element (8) is provided with a lip that engages the arcuate guide (27) under spring force, which lip is moved out of engagement with the arcuate guide upon attachment of the connecting element (8) to the support (7).

5. A device (1) according to any one of the preceding claims, **characterized in that** the device comprises a mounting bracket to be mounted to a wall, to which the support is pivotally connected.

6. A device (1) according to claim 5, **characterized in that** at least one arm is positioned between the mounting bracket and the support (7), which arm is pivotally connected to the mounting bracket with one end and which is pivotally connected to the support (7) with the other end.

7. A device (1) according to any one of the preceding claims 5 or 6, **characterized in that** an O-ring (13) is present between the mounting bracket, the arm(s) and/or the support (7), which can pivot relative to each other, which O-ring (13) has an external diameter larger than that of the mounting bracket, the arm(s) and/or the support present on either side of said O-ring (13).

8. A device (1) according to any one of the preceding claims, **characterized in that** said support (7) is provided with a U-shaped recess, the legs of which U-shaped recess (32) extend at least partially around the arcuate recess (32) and the arcuate guide (27) when the connecting element (8) is connected to the support (7).

## Patentansprüche

1. Vorrichtung (1), die dazu geeignet ist, eine Komponente zu halten, wobei die Vorrichtung eine Halterung (7) aufweist, die mit mindestens einer Ausnehmung versehen ist, in der ein mit der Komponente verbindbares Verbindungselement (8) lösbar angebracht werden kann, wobei
- das Verbindungselement (8) einen ersten Teil (25) mit einem Plattenelement (26), das lösbar mit der Komponente verbindbar ist, und mit einer bogenförmigen Führung (27) aufweist, die mit dem Plattenelement (26) verbunden ist,
- das Verbindungselement (8) ferner einen lösbar mit der Halterung (7) zu verbindenden zweiten Teil (28) aufweist, wobei der zweite Teil (28) zwei Abschnitte (29, 30) und eine bogenförmige Ausnehmung (32) zwischen den beiden Abschnitten (29, 30) aufweist, in welcher die bogenförmige Führung (27) vorhanden ist,
- die bogenförmige Führung (27) unter der Einwirkung des Gewichts des Verbindungselements (8) und der damit verbindbaren Komponente auf einer Seite an einem der Abschnitte (29) anliegt und auf der anderen Seite am anderen Abschnitt (30) anliegt,
- zwischen der bogenförmigen Führung (27) und den Abschnitten (29, 30) auftretende Reibungskräfte einen ausreichenden Widerstand bereitstellen, um zu verhindern, dass das Verbindungselement (8) und die damit verbindbare Komponente kippen, **dadurch gekennzeichnet, dass**
- die Komponente ein Flachbildschirm ist, mit dessen Rückseite das Plattenelement (26) verbunden werden kann,
- die Vorrichtung (1) mit einer Wand (40) verbunden werden kann, wodurch sie, wenn der Flachbildschirm nicht verwendet wird, in einer Position angeordnet werden kann, in der sich der Flachbildschirm und das Plattenelement (26) im Wesentlichen parallel zur Wand (40) erstrecken,
- das Verbindungselement (8) zusammen mit der Halterung (7) um eine sich senkrecht erstreckende Achse (6) geschwenkt werden kann, während der erste Teil des Verbindungselements (8) bezüglich der Halterung (7) um eine sich waagerecht erstreckende Achse (33) geneigt werden kann,
- wobei sich in dieser Stellung die waagerecht und die senkrecht ersteckende Achse (6, 33) parallel zum Plattenelement erstrecken,
- wodurch der erste Teil (25) mittels der bogenförmigen Führung (27) manuell gegen die Reibungskräfte bezüglich des zweiten Teils (28) um die sich waagerecht erstreckende Achse (33) geneigt werden kann.

2. Vorrichtung (1) nach Anspruch 1, **dadurch gekennzeichnet, dass** das Verbindungselement (8) verschiebbar in der Ausnehmung der Halterung (7) angebracht sein kann.

3. Vorrichtung (1) nach einem der vorhergehenden Ansprüche, **dadurch gekennzeichnet, dass** die bogenförmige Führung (27) in der bogenförmigen Ausnehmung (32) festgelegt sein kann.

4. Vorrichtung (1) nach Anspruch 3, **dadurch gekennzeichnet, dass** das Verbindungselement (8) mit einer Lippe versehen ist, die unter Federkraft in die bogenförmige Führung (27) eingreift, wobei die Lippe bei der Befestigung des Verbindungselements (8) an der Halterung (7) außer Eingriff mit der bogenförmigen Führung bewegt wird.

5. Vorrichtung (1) nach einem der vorhergehenden Ansprüche, **dadurch gekennzeichnet, dass** die Vorrichtung einen an einer Wand anzubringenden Befestigungsträger aufweist, mit dem die Halterung schwenkbar verbunden ist.

6. Vorrichtung (1) nach Anspruch 5, **dadurch gekennzeichnet, dass** mindestens ein Arm zwischen dem Befestigungsträger und der Halterung (7) angeordnet ist, wobei der Arm mit einem Ende schwenkbar mit dem Befestigungsträger und mit dem anderen Ende schwenkbar mit der Halterung (7) verbunden ist.

7. Vorrichtung (1) nach einem der vorhergehenden Ansprüche 5 oder 6, **dadurch gekennzeichnet, dass** zwischen dem Befestigungsträger, dem Arm/den Armen und/oder der Halterung (7), die zueinander schwenken können, ein O-Ring (13) vorhanden ist, wobei der O-Ring (13) einen Außendurchmesser besitzt, der größer ist als der des Befestigungsträgers, des Arms/der Arme und/oder der Halterung, die auf beiden Seiten des O-Rings (13) vorhanden sind.

8. Vorrichtung (1) nach einem der vorhergehenden Ansprüche, **dadurch gekennzeichnet, dass** die Halterung (7) mit einer U-förmigen Ausnehmung versehen ist, wobei die Schenkel der U-förmigen Ausnehmung (32) sich zumindest teilweise um die bogenförmige Ausnehmung (32) und die bogenförmige Führung (27) erstrecken, wenn das Verbindungselement (8) mit der Halterung (7) verbunden ist.

## Revendications

1. Dispositif (1) convenant pour supporter un élément, ledit dispositif comprend un support (7) muni d'au moins un évidement dans lequel un élément de raccordement (8) pouvant être raccordé à l'élément peut être monté de manière amovible,
- l'élément de raccordement (8) comporte une première partie (25) qui comprend un élément formant plaque (26) devant être raccordé de manière amovible à l'élément, ainsi qu'un guide arqué (27) raccordé audit élément formant plaque (26),
- l'élément de raccordement (8) comporte en outre une deuxième partie (28) devant être raccordée de manière amovible au support (7), ladite deuxième partie (28) comprenant deux sections (29, 30) et un évidement arqué (32) entre les deux sections (29, 30) dans lequel le guide arqué (27) est présent,
- le guide arqué (27) bute contre l'une des sections (29) d'un côté et contre l'autre section (30) de l'autre côté sous l'influence du poids de l'élément de raccordement (8) et de l'élément pouvant lui être raccordé,
- des forces de frottement, qui apparaissent entre le guide arqué (27) et les sections (29, 30), fournissent une résistance suffisante pour empêcher une inclinaison de l'élément de raccordement (8) et de l'élément pouvant lui être raccordé, **caractérisé en ce que**
- l'élément est un écran plat sur le côté arrière duquel l'élément formant plaque (26) peut être raccordé,
- le dispositif (1) peut être raccordé à une paroi (40), ainsi lorsque l'écran plat n'est pas utilisé, il peut être positionné dans une position dans laquelle l'écran plat et l'élément formant plaque (26) s'étendent sensiblement parallèlement à la paroi (40),
- l'élément de raccordement (8) peut être pivoté de concert avec le support (7) autour d'un axe s'étendant verticalement (6), tandis que la première partie de l'élément de raccordement (8) peut être inclinée autour d'un axe s'étendant horizontalement (33) par rapport au support (7),
- les axes s'étendant verticalement et horizontalement (6, 33) s'étendent parallèlement à l'élément formant plaque dans ladite position
- ainsi, à l'encontre des forces de frottement, la première partie (25) peut être inclinée manuellement autour de l'axe s'étendant horizontalement (33) par rapport à ladite deuxième partie (28) au moyen dudit guide arqué (27).

2. Dispositif (1) selon la revendication 1, **caractérisé en ce que** l'élément de raccordement (8) peut être fixé de manière coulissante dans l'évidement du support (7).

3. Dispositif (1) selon l'une quelconque des revendications précédentes, **caractérisé en ce que** le guide arqué (27) peut être bloqué en position dans l'évidement arqué (32).

4. Dispositif (1) selon la revendication 3, **caractérisé en ce que** l'élément de raccordement (8) est muni d'une lèvre qui coopère avec le guide arqué (27) sous l'effet d'une force de ressort, la lèvre se dégageant du guide arqué lors de la fixation de l'élément de raccordement (8) sur le support (7).

5. Dispositif (1) selon l'une quelconque des revendications précédentes, **caractérisé en ce que** le dispositif comprend un support de fixation devant être monté sur une paroi, sur lequel le support est raccordé de manière pivotante.

6. Dispositif (1) selon la revendication 5, **caractérisé en ce qu'**au moins un bras est positionné entre le support de fixation et le support (7), le bras étant raccordé de manière pivotante au support de fixation par une extrémité et raccordé de manière pivotante au support (7) par l'autre extrémité.

7. Dispositif (1) selon l'une quelconque des revendications 5 ou 6 précédentes, **caractérisé en ce qu'**un joint torique (13) est présent entre le support de fixation, le(s) bras et/ou le support (7), qui peuvent pivoter les uns par rapport aux autres, ledit joint torique (13) ayant un diamètre extérieur supérieur au diamètre du support de fixation, du ou des bras et/ou du support présents sur l'un ou l'autre côté du joint torique (13).

8. Dispositif (1) selon l'une quelconque des revendications précédentes, **caractérisé en ce que** ledit support (7) est muni d'un évidement en U, les jambes de cet évidement en U (32) s'étendant au moins en partie autour de l'évidement arqué (32) et du guide arqué (27) lorsque l'élément de raccordement (8) est raccordé au support (7).
